(19)

Europäisches Patentamt
European Patent Office
Office européen des brevets

(11) **EP 4 407 520 A1**

(12) **EUROPEAN PATENT APPLICATION**

(43) Date of publication:
**31.07.2024 Bulletin 2024/31**

(21) Application number: **24154143.2**

(22) Date of filing: **26.01.2024**

(51) International Patent Classification (IPC):
**G06N 3/0464** (2023.01)   **G06N 3/0475** (2023.01)
**G06N 3/09** (2023.01)   G06N 3/0455 (2023.01)

(52) Cooperative Patent Classification (CPC):
**G06N 3/0464; G06N 3/0475; G06N 3/09;**
G06N 3/0455

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **26.01.2023 US 202363441417 P**

(71) Applicant: **GOOGLE LLC**
**Mountain View CA 94043 (US)**

(72) Inventor: **CHEN, Ting**
**Mountain View, 94043 (US)**

(74) Representative: **Hau, Darren Jun Wai**
**Venner Shipley LLP**
**200 Aldersgate**
**London EC1A 4HD (GB)**

(54) **NOISE SCHEDULING FOR DIFFUSION NEURAL NETWORKS**

(57)   Methods, systems, and apparatus, including computer programs encoded on computer storage media, for generating a network output using a diffusion neural network and for training a diffusion neural network with a modified noise scheduling strategy.

FIG. 1

EP 4 407 520 A1

**Description**

BACKGROUND

This specification relates to generating outputs conditioned on conditioning inputs using neural networks.

Neural networks are machine learning models that employ one or more layers of nonlinear units to predict an output for a received input. Some neural networks include one or more hidden layers in addition to an output layer. The output of each hidden layer is used as input to or more other layers in the network, i.e., one or more other hidden layers, the output layer, or both. Each layer of the network generates an output from a received input in accordance with current values of a respective set of parameters.

SUMMARY

This specification describes a system implemented as computer programs on one or more computers in one or more locations that trains a diffusion neural network to generate training network outputs.

Generally, the conditioning input characterizes one or more desired properties for the network output, i.e., characterizes one or more properties that the final network output generated by the system should have.

More specifically, the system generates the network output using a diffusion neural network.

The system can modify the training of the diffusion neural network, the inputs to the diffusion neural network after training, or both to increase the quality of the network outputs generated by the diffusion neural network.

Particular embodiments of the subject matter described in this specification can be implemented so as to realize one or more of the following advantages.

This specification describes techniques for improving the performance of diffusion neural networks in generating outputs, e.g., in generating images, audio, or video. In particular, this specification describes techniques that modify the noise that is applied to training network outputs as part of the training of diffusion neural networks. That is, this specification describes techniques for modifying the noise scheduling strategy for the training of the diffusion neural network in order to improve the quality of network outputs that are generated by the diffusion neural network after training.

In particular, different noise schedules can drastically impact the performance of the diffusion neural network and the optimal noise schedule can depend on the task (e.g., on the sizes of the network outputs that need to be generated by the diffusion neural network). For example, when increasing the image size, the optimal noise scheduling shifts towards a noisier one due to increased redundancy in pixels. Thus, different tasks can benefit from different noise schedules.

To alleviate these issues and improve performance, this specification describes techniques for scaling the input data by a scale factor. This specification also describes techniques for using a linear noise schedule during training. By applying one or both of these modifications, the system can significantly improve the training of the diffusion neural network, thereby improving the operation of the neural network after training. Optionally, the inputs to the diffusion neural network can also be normalized prior to being processed by the diffusion neural network, mitigating the impact of the scaling factor on the variance of the inputs processed by the model and further improving training quality.

The details of one or more embodiments of the subject matter of this specification are set forth in the accompanying drawings and the description below. Other features, aspects, and advantages of the subject matter will become apparent from the description, the drawings, and the claims.

BRIEF DESCRIPTION OF THE DRAWINGS

FIG. 1 is a diagram of an example data generation system.
FIG. 2 is a flow diagram of an example process for training the diffusion neural network.
FIG. 3 shows an example of a set of noised images.
FIG. 4 is a flow diagram of an example process for generating a final network output using the trained diffusion neural network.
FIG. 5 shows an example of the performance of the described techniques on an image generation task.

Like reference numbers and designations in the various drawings indicate like elements.

DETAILED DESCRIPTION

This specification describes a system implemented as computer programs on one or more computers in one or more locations that trains a diffusion neural network for use in generating network outputs.

Optionally, the generation of any given network output can be conditioned on a conditioning input. Generally, the conditioning input characterizes one or more desired properties for the network output, i.e., characterizes one or more properties that the final network output generated by the system should have.

The system can be configured to generate any of a variety of network outputs in an unconditional manner or conditioned on any of a variety of conditioning inputs.

For example, the system can be configured to generate audio data, e.g., a waveform of audio or a spectrogram, e.g., a mel-spectrogram or a spectrogram where the frequencies are in a different scale, of the audio.

In this example, the conditioning input can be text or features of text that the audio should represent, i.e., so that the system serves as a text-to-speech machine learning model that converts text or features of the text to audio data for an utterance of the text being spoken.

As another example, the conditioning input can identify a desired speaker for the audio, i.e., so that the system generates audio data that represents speech by the desired speaker.

As another example, the conditioning input can characterize properties of a song or other piece of music, e.g., lyrics, genre, and son, so that the system generates a piece of music that has the properties characterized by the conditioning input.

As another example, the conditioning input can specify a classification for the audio data into a class from a set of possible classes, so that the system generates audio data that belongs to the class. For example, the classes can represent types of musical instruments or other audio emitting devices, i.e., so that the system generates audio that is emitted by the corresponding class, types of animals, i.e., so that the system generates audio that represent noises generated by the corresponding animal, and so on.

As another particular example, the network output can be an image, such that the system can perform conditional image generation by generating the intensity values of the pixels of the image.

In this particular example, the conditioning input can be a sequence of text and the network output can be an image that describes the text, i.e., the conditioning input can be a caption for the output image.

As yet another particular example, the conditioning input can be an object detection input that specifies one or more bounding boxes and, optionally, a respective type of object that should be depicted in each bounding box.

As yet another particular example, the conditioning input can specify an object class from a plurality of object classes to which an object depicted in the output image should belong.

As yet another particular example, the conditioning input can specify an image at a first resolution and the network output can include the image at a second, higher resolution.

As yet another particular example, the conditioning input can specify an image and the network output can comprise a de-noised version of the image.

As yet another particular example, the conditioning input can specify an image including a target entity for detection, e.g. a tumor, and the network output can comprise the image without the target entity, e.g. to facilitate detection of the target entity by comparing the images.

As yet another particular example, the conditioning input can be a segmentation that assigns each of a plurality of pixels of the output image to a category from a set of categories, e.g., that assigns to each pixel a respective one of the category.

More generally, the task can be any task that outputs continuous data conditioned on a conditioning input. For example, the output can be an output of a different sensor, e.g., a lidar point cloud, a radar point cloud, an electrocardiogram reading, and so on, and the conditioning input can represent the type of data that should be measured by the sensor. Where a discrete output is desired this can be obtained, e.g. by thresholding.

In any of the above examples, the network output generated using the diffusion neural network can either be an network output in the output space, i.e., so that the values in the network output are the values of a network output of the appropriate type, e.g., values of image pixels, amplitude values of an audio signal, and so on, or an network output in a latent space, i.e., so that the values in the network output are values in a latent representation of an network output in the output space.

When the network output is generated in a latent space, the system can generate a final network output in pixel space by processing the network output in the latent space using a decoder neural network, e.g., one that has been pre-trained in an auto-encoder framework. During training, the system can use an encoder neural network, e.g., one that has been pre-trained jointly with the decoder in the auto-encoder framework, to encode target network outputs to generate target outputs for the diffusion neural network.

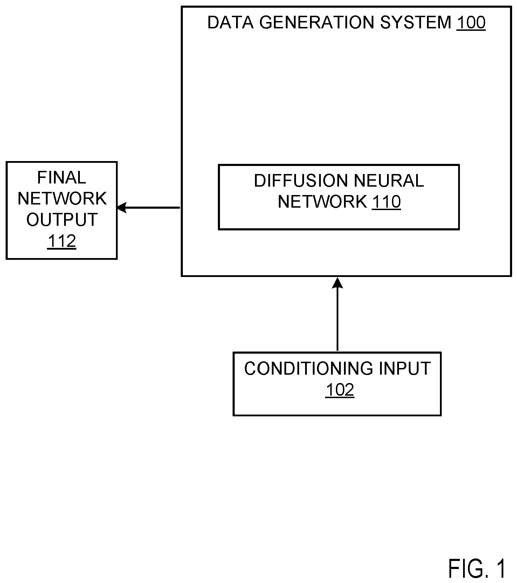

FIG. 1 is a diagram of an example data generation system 100. The data generation system 100 is an example of a system implemented as computer programs on one or more computers in one or more locations, in which the systems, components, and techniques described below can be implemented.

The system 100 obtains a conditioning input 102 and uses the conditioning input 102 to generate a network output 112 that has the one or more desired properties characterized by the conditioning input 102.

In particular, to generate the network output 112, the system 100 uses a diffusion neural network 110 to generate the network output 112 across multiple updating iterations by performing a reverse diffusion process.

The diffusion neural network 110 can be any appropriate diffusion neural network that has been trained, e.g., by the system 100 or another training system, to, at any given updating iteration, process a diffusion input for the updating iteration that includes the current network output (as of the updating iteration) to generate a diffusion output for the updating iteration.

For example, the diffusion neural network 110 can be a convolutional neural network, e.g., a U-Net, that has multiple convolutional layer blocks. In these cases, the diffusion neural network 110 can include one or more attention layer blocks interspersed among the convolutional layer blocks. As will be described below some or all of the attention blocks can be conditioned on a representation of the conditioning input 102.

As another example, the diffusion neural network 110 can be a Recurrent Interface Network (RIN). A recurrent interface network is a neural network that includes a sequence of neural network blocks that each update a set of interface vectors that are derived from an input to the neural network. In particular, each block updates the set of interface vectors using a set of latent vectors, with the number of latent vectors in the set being independent from the number of interface vectors in the set of interface vectors. In particular, the number of latent vectors in the set is generally smaller than the number of interface vectors in the set. Recurrent Interface Networks are described in more detail in Scalable Adaptive Computation for Iterative Generation, available at arXiv:2212.11972 and in RECURRENT INTERFACE NETWORKS, Application No. PCT/US2023/085784, filed on 12/22/2023, the entire contents of which are hereby incorporated herein by reference in their entirety.

As another example, the diffusion neural network 110 can be a Transformer neural network that processes the diffusion input through a set of self-attention layers to generate the denoising output.

The neural network 110 can be conditioned on the conditioning input 102 in any of a variety of ways.

As one example, the system 100 can use an encoder neural network to generate one or more embeddings that represent the conditioning input 102 and the diffusion neural network 110 can include one or more cross-attention layers that each cross-attend into the one or more embeddings.

An embedding, as used in this specification, is an ordered collection of numerical values, e.g., a vector of floating point values or other types of values.

For example, when the conditioning input is text, the system can use a text encoder neural network, e.g., a Transformer neural network, to generate a fixed or variable number of text embeddings that represent the conditioning input.

When the conditioning input is an image, the system can use an image encoder neural network, e.g., a convolutional neural network or a vision Transformer neural network, to generate a set of embeddings that represent the image.

When the conditioning input is audio, the system can use, e.g., an audio encoder neural network, e.g., an audio encoder neural network that has been trained jointly with a decoder neural network as part of a neural audio codec, to generate one or more embeddings that encode the audio.

When the conditioning input is a scalar value, the system can use, e.g., an embedding matrix to map the scalar value or a one-hot representation of the scalar value to an embedding.

In some implementations, the diffusion output is an estimate of the noise component of the current network output, i.e., the noise that needs to be combined with, e.g., added to or subtracted to, a final network output, i.e., to the network output 112 being generated by the system 100, to generate the current network output.

In some other implementations, the diffusion output is an estimate of the final network output given the current network output, i.e., an estimate of the network output that would result from removing the noise component of the current network output.

For example, the diffusion neural network 110 can have been trained on a set of training network outputs using a denoising score-matching objective to generate the diffusion output.

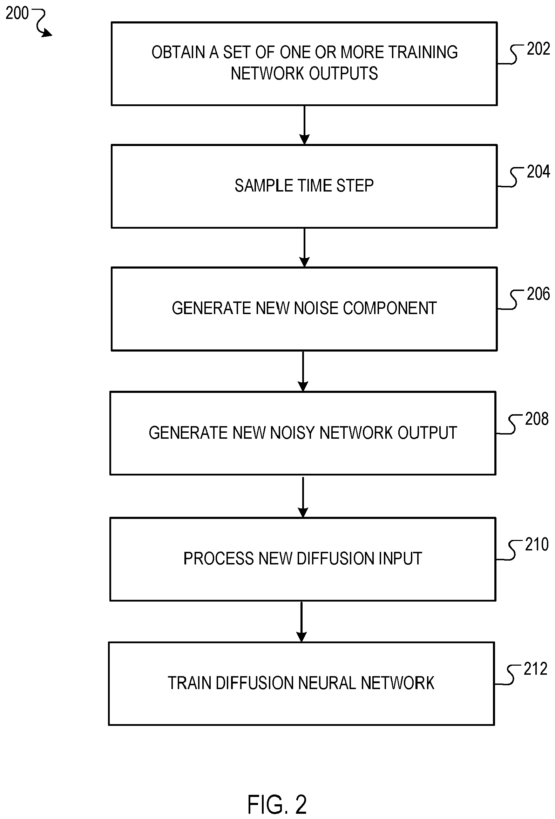

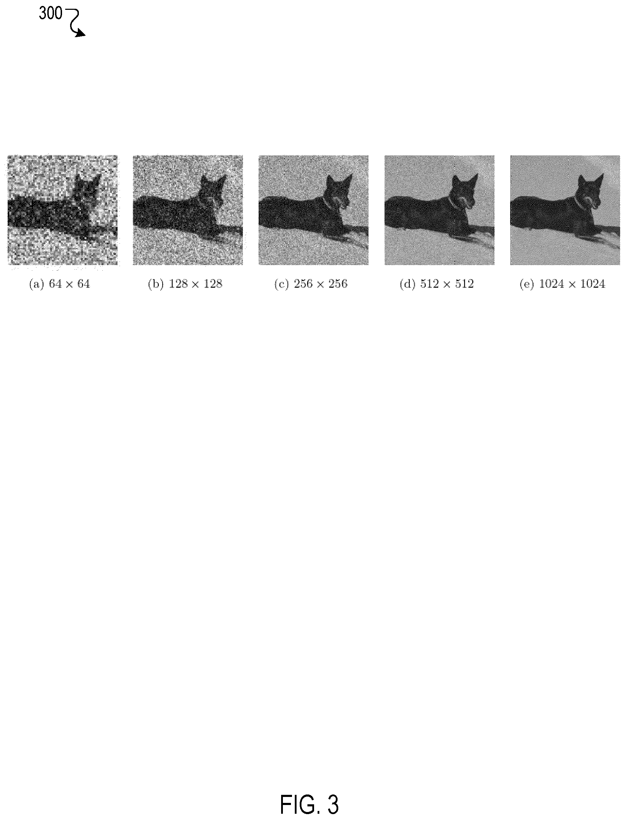

Training the diffusion neural network 110 is described in more detail below with reference to FIGS. 2 and 3.

At each updating iteration, the system 100 uses the diffusion output generated by the diffusion neural network 110 to update the current network output as of the updating iteration.

After the last updating iteration, the system 100 outputs the current network output as the final network output 112.

For example, the system 100 can provide the network output 112 for presentation or play back to a user on a user computer or store the network output 112 for later use.

In some implementations, the diffusion neural network 110 is one of a sequence of diffusion neural networks, e.g., a hierarchy or a cascade of diffusion neural networks, that the system 100 uses to generate the final network output. For example, each diffusion neural network in the sequence can receive as input the network output generated by the preceding diffusion neural network in the sequence and generate an network output that has an increased resolution, e.g., an increased spatial resolution, an increased temporal resolution, or both, relative to the preceding diffusional neural network in the sequence. In these implementations, all of the neural networks in the sequence can receive the conditioning input 102 or only a proper subset of the diffusion neural networks in the sequence can receive the conditioning input 102, e.g., only the diffusion neural networks at one or more earliest positions in the sequence.

Generally, the system 100 can modify one or more of: the training of the diffusion neural network 110, the inputs to the diffusion neural network 110, or how the diffusion neural network 110 is used to generate network outputs after training to increase the quality of the network outputs generated by the diffusion neural network 110.

As one example, the system 100 can modify the noise schedule used during the training of the diffusion neural network 110 in order to improve the quality of the network outputs that are generated by the diffusion neural network 110 after training.

This is described in more detail below with reference to FIG. 2.

As another example, after training and at each updating iteration, the system 100 can modify the current version of the network output in order to improve the quality of the final network output that is generated after the last updating iteration.

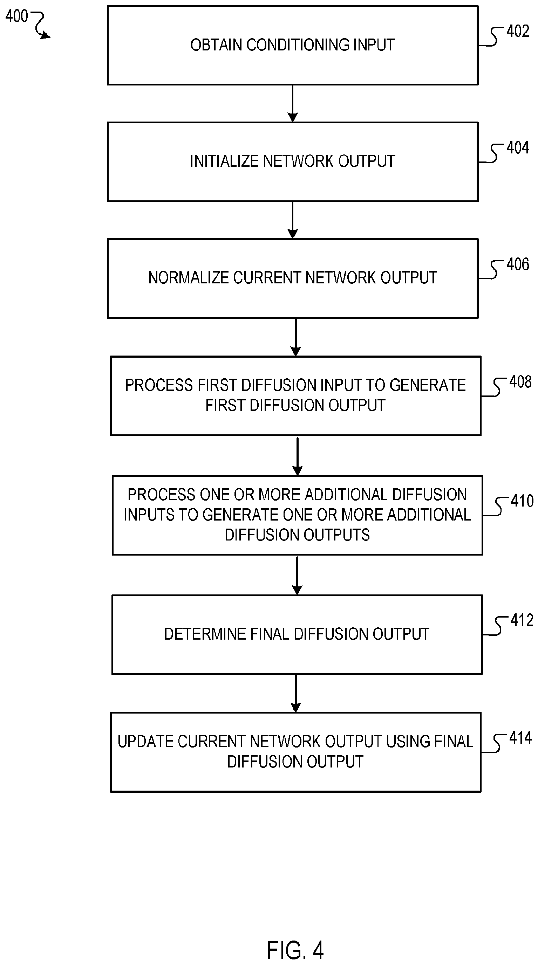

This is described in more detail below with reference to FIG. 4.

FIG. 2 is a flow diagram of an example process 200 for training a diffusion neural network so that the diffusion neural network can be conditioned on variable numbers of context network outputs. For convenience, the process 200 will be described as being performed by a system of one or more computers located in one or more locations. For example, a data generation system, e.g., the data generation system 100 depicted in FIG. 1, appropriately programmed in accordance with this specification, can perform the process 200.

The system can repeatedly perform iterations of the process 200 in order train the diffusion neural network.

The system obtains a set of one or more training network outputs (step 202). Optionally, some or all of the training network outputs may be associated with a corresponding conditioning input. For example, the system can sample the training network outputs from a larger set of training network outputs, i.e., from a set of training data for training the diffusion neural network.

The system then performs steps 204-210 for each of the training network outputs.

The system samples a time step by sampling from a time step distribution over time steps between a lower bound and an upper bound of the time step distribution (step 204). For example, the time step distribution can be a continuous uniform distribution over the interval between zero and one, inclusive. That is, the time step has a value between zero and one, inclusive.

The system generates a new noise component (step 206). The noise component generally has the same dimensionality as the training network output but has noisy values. For example, the system can generate the new noise component by sampling each value in the new noise component from a specified noise distribution, e.g., a Normal distribution.

The system generates a new noisy network output by combining the training network output and the new noise component in accordance with a noise schedule that depends on the sampled time step and a scaling factor that is not equal to one (step 208).

That is, the noise schedule is a function that maps the input to the function to an output that defines respective weights for the training network output and the new noise component. The system then combines the training network output in accordance with the respective weights to generate the new noisy network output, e.g., by computing a weighted sum of the training network output and the new noise component.

For example, the system can combine the training network output and the new noise component as follows:

$$x_t = \sqrt{\gamma(t)}\, b x_0 + \sqrt{1 - \gamma(t)}\, \epsilon,$$

where $\varepsilon$ is the noise component, b is the scaling factor, y(t) is the noise level, i.e., the output of the noise schedule for the sampled time step $t$, and $x_0$ is the training network input.

The importance of the noise level and noise schedule can be demonstrated by the example in Figure 3.

FIG. 3 shows an example 300 of a set of noised images a) through e). Each noised image has a different resolution and has been generated by combining (i) the same ground truth image (downsampled to the corresponding resolution ) with (i) a noise component sampled from the same noise distribution in accordance with the same noise level $\gamma$ = .7. As can be seen from FIG. 3, as the image size is increased, the denoising task at the same noise level (i.e. the same $\gamma$ ) becomes simpler. This is due to the fact that redundancy of information in data (e.g., correlation among nearby pixels) typically increases with the image size. Furthermore, the noises are independently added to each pixel, making it easier to recover the original signal when image size increases. Therefore, the optimal schedule at a smaller resolution may not be optimal at a higher resolution. For example, higher resolutions (larger outputs) may require higher noise levels during training in order for the neural network to be effectively trained. Thus, if the noise schedule is not adjusted accordingly, it may lead to under training of certain noise levels and can hurt the performance of the trained diffusion neural network.

Making use of the scaling factor and the noise schedule can account for this phenomenon and improve the performance of the neural network after training.

In particular, by reducing the scaling factor (to a number less than 1), the noise level within the noisy network output is increased. Thus, given that tasks at higher resolutions require higher noise levels, the scaling factor can be set to smaller values when output resolutions are higher. For example, the scaling factor can be set to one of 1, .2, .3, .4, .5, .6, .7., .8, or .9.

The system can use any of a variety of noise schedules in combination with the scaling factor.

As one example, the noise schedule can be a one-dimensional function of the sampled time step.

For example, the noise schedule can be a linear function of the sampled time step and, more specifically, $\gamma(t) = 1 - t$. Using this noise schedule can ensure that the training covers all noise levels during training, improving the performance of the diffusion neural network after training.

As another example, the noise schedule can be a cosine schedule or a sigmoid schedule.

The system processes a new diffusion input that includes (i) the new noisy network output and (ii) data specifying the sampled time step using the diffusion neural network to generate a new diffusion output that defines an estimate of the new noise component for the sampled time step (step 210).

As described above, in some implementations, the diffusion output is an estimate of the noise component of the new noisy network output.

In some other implementations, the diffusion output is an estimate of the training network output given the new noisy network output, i.e., an estimate of the network output that would result from removing the noise component of the new noisy network output.

When the training network output is associated with a conditioning input, the new diffusion input also includes a representation of the conditioning input.

The new diffusion input can also include other data, e.g., a representation of the noise level, of the sampled time step, or both.

Optionally, as part of processing the new diffusion input, the system can normalize the new noisy network output before the new diffusion input is processed by the input layer of the diffusion neural network. For example, the system can normalize the new noisy network output by a variance of the new noisy network output. That is, the system can compute the variance of the values within the new noisy network output and then divide each value by the variance. Performing this normalization can mitigate the impact of the scaling factor b on the variance of the new noisy network output. That is, without performing the normalization, due to the application of the scaling factor, the new noisy network output can have a different variance from the noise component and the current network output even if the current network output and the noise component have the same variance, which can potentially decrease the effectiveness of the training process. Normalizing the new noisy network output ensures that it has unit variance before being processed by the diffusion neural network, mitigating the impact of the scaling factor on the variance.

The system then trains the diffusion neural network on an objective (step 212).

The objective measures, for each training network output, an error between (i) the estimate of the new noise component for the sampled time step generated by processing the corresponding new diffusion input for the training network output and (ii) the new noise component for the sampled time step for the training network output. As a particular example, the objective can be an average or a sum of the errors or can include a first term that is the average or sum of the errors and one or more other terms, e.g., regularization terms, auxiliary loss terms, and so on.

For example, when the new diffusion output represents a prediction of the training network output, one example of the error can be:

$$\|f(x_t) - x_0\|^2$$

where $f(x_t)$ is the new diffusion output.

As another example, when the new diffusion output represents a prediction of the noise component, one example of the error can be:

$$\|f(x_t) - \epsilon\|^2$$

where $f(x_t)$ is the new diffusion output.

To train the diffusion neural network on the objective, the system can compute a gradient of the objective with respect to the parameters of the diffusion neural network, e.g., through backpropagation, and then update the parameters by applying an optimizer, e.g., the Adam optimizer, the AdamW optimizer, the Adafactor optimizer, a learned optimizer, and so on, to the gradient.

FIG. 4 is a flow diagram of an example process 400 for generating a final network output using the trained diffusion neural network. For convenience, the process 400 will be described as being performed by a system of one or more computers located in one or more locations. For example, a data generation system, e.g., the data generation system 100 depicted in FIG. 1, appropriately programmed in accordance with this specification, can perform the process 400.

The system obtains a conditioning input (step 402).

The system initializes a network output (step 404).

Generally, the initialized network output is the same dimensionality as the final network output but has noisy values. That is, the initialized network output has the same number of elements as the final network output.

For example, the system can initialize the network output, i.e., can generate the first instance of the network output, by sampling a value for each element in the network output from a corresponding noise distribution, e.g., a Normal distribution or a different noise distribution. That is, the network output includes multiple elements and the initial network output includes the same number of elements, with the value for each element being sampled from a corresponding noise distribution.

The system then generates the final network output by updating the network output at each of a plurality of updating iterations. In other words, the final network output is the network output after the last iteration of the plurality of updating iterations.

In some cases, the number of iterations is fixed. In other cases, the system or another system can adjust the number of iterations based on a latency requirement for the generation of the final network output, i.e., can select the number of iterations so that the final network output will be generated to satisfy the latency requirement. In yet other cases, the system or another system can adjust the number of iterations based on a computational resource consumption requirement for the generation of the final network output, i.e., can select the number of iterations so that the final network output will be generated to satisfy the requirement. For example, the requirement can be a maximum number of floating operations (FLOPS) to be performed as part of generating the final network output.

Generally, the system performs a reverse diffusion process across the updating iterations to update the current network output at each iteration. Each updating iteration corresponds to a different time step in a time interval, e.g., the interval between zero and one or to another appropriate time interval. For example, each different time step can correspond to a different point on a uniform discretization of the time interval or to a different point on a different, non-uniform discretization of the time interval.

In particular, at each updating iteration, the system performs steps 406-412 to update the current network output as of the updating iteration.

The system normalizes the current network output as of the updating iteration (step 406). For the first updating iteration, the current network output is the initialized network output. For each subsequent updating iteration, the current network output is the updated network output from the preceding updating iteration.

For example, the system can normalize the current network output using the variance of the current network output as described above.

The system processes a first diffusion input for the updating iteration that includes the current network output and a representation of the conditioning input using the diffusion neural network to generate a first diffusion output for the updating iteration (step 408).

For example, prior to the first updating iteration, the system can process the conditioning input using an embedding neural network to generate one or more embeddings of the conditioning input.

The first diffusion input for any given updating iteration can then include the one or more embeddings of the conditioning input.

The first diffusion input can also include one or more of: data identifying the updating iteration, data characterizing one or more context network outputs for use as context during the network output generation, scalar values for one or more properties of the generated network output, and so on.

Optionally, i.e., when using classifier-free guidance, the system can also process one or more additional diffusion inputs for the updating iteration to generate a respective additional diffusion output for the updating iteration for each additional diffusion input (step 410).

Each additional diffusion input also includes the current network output as of the updating iteration but includes a different conditioning input.

For example, one of the additional diffusion inputs can be an unconditional diffusion input that include a representation of a conditioning input that has been designated to indicate that the network output should be generated unconditionally.

As another example, one of the additional diffusion inputs can be a negative diffusion input that includes a representation of a negative conditioning input that indicates properties that the generated network output should not have.

That is, the system can also receive a negative conditioning input that indicates properties that the generated network output should not have and can include a representation of the negative conditioning input, e.g., one or more embeddings generated from the negative conditioning input, in the negative diffusion input.

The system determines a final diffusion output for the updating iteration from the first diffusion output and, when generated, the additional diffusion output(s) (step 412).

When no additional diffusion outputs are generated, the system can set the final diffusion output equal to the first diffusion output.

When one or more additional diffusion outputs are generated, the system can combine the first diffusion output and the final diffusion outputs in accordance with a guidance weight w for the updating iteration.

For example, the system can set the final diffusion output equal to (1+w) * the first diffusion output - w*the additional diffusion output or, when there are multiple additional diffusion outputs, the sum of the additional diffusion outputs.

The system then updates the current network output using the final diffusion output (step 414).

For example, the system can compute an initial estimate of the final network output from the final diffusion output and then use the initial estimate of the final network output to update the current network output.

For example, when the diffusion output is an estimate of the final network output, the system can use the final diffusion output as the initial estimate of the noise component.

When the diffusion output is an estimate of the noise component, the system can compute the initial estimate of the final network output using the final diffusion output, for example, as follows:

$$\frac{x_t - \sqrt{1-\gamma(t)}\hat{\varepsilon}}{\sqrt{\gamma(t)}},$$

where $\hat{\varepsilon}$ is the final diffusion output, t is the time step corresponding to the update iteration, and y(t) is the noise level that is the output of a noise schedule for inference. Note that a different noise schedule can be used for inference than the noise schedule that was used for training. For example, the noise schedule can be the 1-t schedule for training and a cosine schedule for inference.

For the last updating iteration, the system can use the initial estimate as the updated network output.

For each updating iteration other than the last updating iteration, the system can apply an appropriate diffusion sampler to the initial estimate to generate the updated network output.

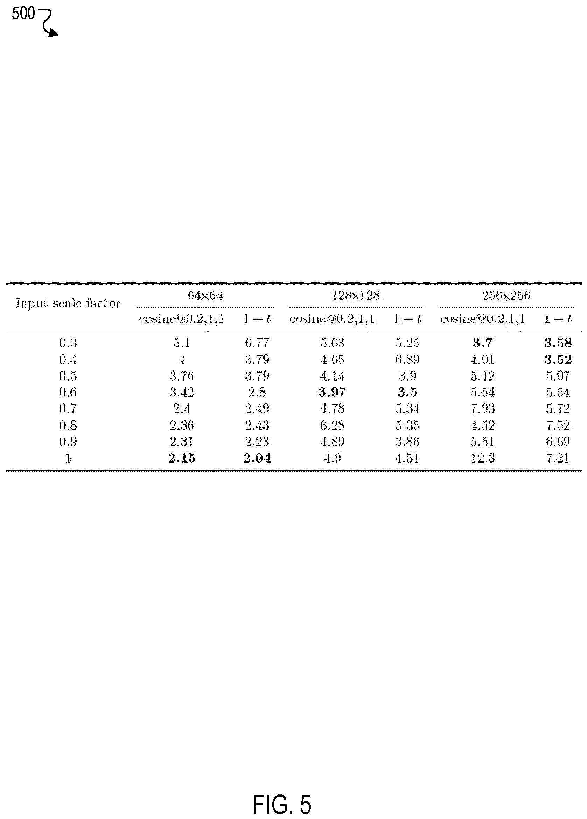

FIG. 5 shows an example 500 of the performance of the described techniques on three image generation tasks, one that requires generating 64x64 images, one that requires generating 128x128 images, and one that requires generating 256x256 images.

In particular, FIG. 5 shows the results in terms of FIDs, where lower scores are better, for various values of the input scale factor, for various image resolutions, and for a 1-$t$ schedule and a cosine schedule.

As can be seen from FIG. 5, as image resolution increases, the optimal input scaling factor decreases, i.e., with the optimal input scaling factor being less than 1 for all but the smallest resolution.

Moreover, FIG. 5 also shows that, given an optimal input scaling factor for the corresponding resolution, the 1-t schedule generally performs better than the cosine schedule.

This specification uses the term "configured" in connection with systems and computer program components. For a system of one or more computers to be configured to perform particular operations or actions means that the system has installed on it software, firmware, hardware, or a combination of them that in operation cause the system to perform the operations or actions. For one or more computer programs to be configured to perform particular operations or actions means that the one or more programs include instructions that, when executed by data processing apparatus, cause the apparatus to perform the operations or actions.

Embodiments of the subject matter and the functional operations described in this specification can be implemented in digital electronic circuitry, in tangibly-embodied computer software or firmware, in computer hardware, including the structures disclosed in this specification and their structural equivalents, or in combinations of one or more of them. Embodiments of the subject matter described in this specification can be implemented as one or more computer programs, e.g., one or more modules of computer program instructions encoded on a tangible non transitory storage medium for execution by, or to control the operation of, data processing apparatus. The computer storage medium can be a machine-readable storage device, a machine-readable storage substrate, a random or serial access memory device, or a combination of one or more of them. Alternatively or in addition, the program instructions can be encoded on an artificially generated propagated signal, e.g., a machine-generated electrical, optical, or electromagnetic signal, that is generated to encode information for transmission to suitable receiver apparatus for execution by a data processing apparatus.

The term "data processing apparatus" refers to data processing hardware and encompasses all kinds of apparatus, devices, and machines for processing data, including by way of example a programmable processor, a computer, or multiple processors or computers. The apparatus can also be, or further include, special purpose logic circuitry, e.g., an FPGA (field programmable gate array) or an ASIC (application specific integrated circuit). The apparatus can optionally include, in addition to hardware, code that creates an execution environment for computer programs, e.g., code that constitutes processor firmware, a protocol stack, a database management system, an operating system, or a combination of one or more of them.

A computer program, which may also be referred to or described as a program, software, a software application, an app, a module, a software module, a script, or code, can be written in any form of programming language, including compiled or interpreted languages, or declarative or procedural languages; and it can be deployed in any form, including as a stand alone program or as a module, component, subroutine, or other unit suitable for use in a computing environment. A program may, but need not, correspond to a file in a file system. A program can be stored in a portion of a file that holds other programs or data, e.g., one or more scripts stored in a markup language document, in a single file dedicated to the program in question, or in multiple coordinated files, e.g., files that store one or more modules, sub programs, or portions of code. A computer program can be deployed to be executed on one computer or on multiple computers that are located at one site or distributed across multiple sites and interconnected by a data communication network.

In this specification, the term "database" is used broadly to refer to any collection of data: the data does not need to be structured in any particular way, or structured at all, and it can be stored on storage devices in one or more locations. Thus, for example, the index database can include multiple collections of data, each of which may be organized and accessed differently.

Similarly, in this specification the term "engine" is used broadly to refer to a software-based system, subsystem, or process that is programmed to perform one or more specific functions. Generally, an engine will be implemented as one or more software modules or components, installed on one or more computers in one or more locations. In some cases, one or more computers will be dedicated to a particular engine; in other cases, multiple engines can be installed and running on the same computer or computers.

The processes and logic flows described in this specification can be performed by one or more programmable computers executing one or more computer programs to perform functions by operating on input data and generating output. The processes and logic flows can also be performed by special purpose logic circuitry, e.g., an FPGA or an ASIC, or by a combination of special purpose logic circuitry and one or more programmed computers.

Computers suitable for the execution of a computer program can be based on general or special purpose microprocessors or both, or any other kind of central processing unit. Generally, a central processing unit will receive instructions and data from a read only memory or a random access memory or both. The essential elements of a computer are a central processing unit for performing or executing instructions and one or more memory devices for storing instructions and data. The central processing unit and the memory can be supplemented by, or incorporated in, special purpose logic circuitry. Generally, a computer will also include, or be operatively coupled to receive data from or transfer data to, or both, one or more mass storage devices for storing data, e.g., magnetic, magneto optical disks, or optical disks. However, a computer need not have such devices. Moreover, a computer can be embedded in another device, e.g., a mobile telephone, a personal digital assistant (PDA), a mobile audio or video player, a game console, a Global Positioning System (GPS) receiver, or a portable storage device, e.g., a universal serial bus (USB) flash drive, to name just a few.

Computer readable media suitable for storing computer program instructions and data include all forms of non volatile memory, media and memory devices, including by way of example semiconductor memory devices, e.g., EPROM, EEPROM, and flash memory devices; magnetic disks, e.g., internal hard disks or removable disks; magneto optical disks; and CD ROM and DVD-ROM disks.

To provide for interaction with a user, embodiments of the subject matter described in this specification can be implemented on a computer having a display device, e.g., a CRT (cathode ray tube) or LCD (liquid crystal display) monitor, for displaying information to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's device in response to requests received from the web browser. Also, a computer can interact with a user by sending text messages or other forms of message to a personal device, e.g., a smartphone that is running a messaging application, and receiving responsive messages from the user in return.

Data processing apparatus for implementing machine learning models can also include, for example, special-purpose hardware accelerator units for processing common and compute-intensive parts of machine learning training or production, e.g., inference, workloads.

Machine learning models can be implemented and deployed using a machine learning framework, .e.g., a TensorFlow framework or a Jax framework.

Embodiments of the subject matter described in this specification can be implemented in a computing system that includes a back end component, e.g., as a data server, or that includes a middleware component, e.g., an application server, or that includes a front end component, e.g., a client computer having a graphical user interface, a web browser, or an app through which a user can interact with an implementation of the subject matter described in this specification, or any combination of one or more such back end, middleware, or front end components. The components of the system can be interconnected by any form or medium of digital data communication, e.g., a communication network. Examples of communication networks include a local area network (LAN) and a wide area network (WAN), e.g., the Internet.

The computing system can include clients and servers. A client and server are generally remote from each other and typically interact through a communication network. The relationship of client and server arises by virtue of computer programs running on the respective computers and having a client-server relationship to each other. In some embodiments, a server transmits data, e.g., an HTML page, to a user device, e.g., for purposes of displaying data to and receiving user input from a user interacting with the device, which acts as a client. Data generated at the user device, e.g., a result of the user interaction, can be received at the server from the device.

While this specification contains many specific implementation details, these should not be construed as limitations on the scope of any invention or on the scope of what may be claimed, but rather as descriptions of features that may be specific to particular embodiments of particular inventions. Certain features that are described in this specification in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially be claimed as such, one or more features from a claimed combination can in some cases be excised from the combination, and the claimed combination may be directed to a subcombination or variation of a subcombination.

Similarly, while operations are depicted in the drawings and recited in the claims in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system modules and components in the embodiments described above should not be understood as requiring such separation in all embodiments, and it should be understood that the described program components and systems can generally be integrated together in a single software product or packaged into multiple software products.

Particular embodiments of the subject matter have been described. Other embodiments are within the scope of the following claims. For example, the actions recited in the claims can be performed in a different order and still achieve desirable results. As one example, the processes depicted in the accompanying figures do not necessarily require the particular order shown, or sequential order, to achieve desirable results. In some cases, multitasking and parallel processing may be advantageous.

**Claims**

1. A method of training a diffusion neural network, the method comprising:

obtaining a set of one or more training network outputs;
for each training network output:

sampling a time step by sampling from a time step distribution over time steps between a lower bound and an upper bound of the time step distribution;
generating a new noise component;
generating a new noisy network output by combining the training network output and the new noise component in accordance with a noise schedule that depends on the sampled time step and a scaling factor that is not equal to one;
processing a new diffusion input comprising (i) the new noisy network output and (ii) data specifying the sampled time step using the diffusion neural network to generate a new diffusion output that defines an estimate of the new noise component for the sampled time step; and

training the diffusion neural network on an objective that measures, for each training network output, an error between the estimate of the new noise component for the sampled time step generated by processing the new diffusion input comprising the new noisy network output generated from the training network output and the new noise component for the sampled time step.

2. The method of claim 1, wherein processing a new diffusion input comprising (i) the new noisy network output and (ii) data specifying the sampled time step using the diffusion neural network to generate a new diffusion output that defines an estimate of the new noise component for the sampled time step comprises:
normalizing the new noisy network output by a variance of the new noisy network output.

3. The method of claim 1 or claim 2, wherein generating a new noisy network output by combining the training network output and the new noise component in accordance with a noise schedule that depends on the sampled time step and a scaling factor that is not equal to one comprises generating a new noisy network output $x_t$ that satisfies:

$$x_t = \sqrt{\gamma(t)}\, b x_0 + \sqrt{1 - \gamma(t)}\, \epsilon,$$

where $\varepsilon$ is the noise component, $b$ is the scaling factor, $\gamma(t)$ is the output of the noise schedule for the sampled time step $t$, and $x_0$ is the training network input.

4. The method of claim 3, wherein $\gamma(t) = 1 - t$.

5. The method of any one of claims 1-3, wherein the noise schedule is a cosine schedule or a sigmoid schedule.

6. The method of any preceding claim, wherein the training network outputs are images.

7. The method of any preceding claim, wherein each training network output is associated with a conditioning input and wherein the new diffusion input comprises a representation of the conditioning input that is associated with the training network output.

8. The method of claim 7, wherein the conditioning input is a text prompt.

9. The method of any preceding claim, further comprising:
after the training, using the trained diffusion neural network to generate a new network output, comprising, at each of a plurality of iterations:

generating a final diffusion output for the iteration, comprising processing a first diffusion input comprising a current network output as of the iteration using the diffusion neural network to generate a first diffusion output, the processing comprising normalizing the current network output; and
updating the current network output using the final diffusion output for the iteration.

10. The method of claim 9, wherein normalizing the current network output comprises normalizing the current network output based on a variance of the current network output.

11. A system comprising:

one or more computers; and
one or more storage devices communicatively coupled to the one or more computers, wherein the one or more storage devices store instructions that, when executed by the one or more computers, cause the one or more computers to perform operations of the respective method of any one of claims 1-10.

12. One or more non-transitory computer storage media storing instructions that when executed by one or more computers cause the one or more computers to perform operations of the respective method of any one of claims 1-10.

DATA GENERATION SYSTEM 100

FINAL NETWORK OUTPUT 112

DIFFUSION NEURAL NETWORK 110

CONDITIONING INPUT 102

FIG. 1

FIG. 2

300

(a) 64 × 64    (b) 128 × 128    (c) 256 × 256    (d) 512 × 512    (e) 1024 × 1024

FIG. 3

400

| OBTAIN CONDITIONING INPUT | 402 |
| --- | --- |

↓

| INITIALIZE NETWORK OUTPUT | 404 |
| --- | --- |

↓

| NORMALIZE CURRENT NETWORK OUTPUT | 406 |
| --- | --- |

↓

| PROCESS FIRST DIFFUSION INPUT TO GENERATE FIRST DIFFUSION OUTPUT | 408 |
| --- | --- |

↓

| PROCESS ONE OR MORE ADDITIONAL DIFFUSION INPUTS TO GENERATE ONE OR MORE ADDITIONAL DIFFUSION OUTPUTS | 410 |
| --- | --- |

↓

| DETERMINE FINAL DIFFUSION OUTPUT | 412 |
| --- | --- |

↓

| UPDATE CURRENT NETWORK OUTPUT USING FINAL DIFFUSION OUTPUT | 414 |
| --- | --- |

FIG. 4

500

| Input scale factor | 64×64 | | 128×128 | | 256×256 | |
|---|---|---|---|---|---|---|
| | cosine@0.2,1,1 | $1-t$ | cosine@0.2,1,1 | $1-t$ | cosine@0.2,1,1 | $1-t$ |
| 0.3 | 5.1 | 6.77 | 5.63 | 5.25 | **3.7** | **3.58** |
| 0.4 | 4 | 3.79 | 4.65 | 6.89 | 4.01 | **3.52** |
| 0.5 | 3.76 | 3.79 | 4.14 | 3.9 | 5.12 | 5.07 |
| 0.6 | 3.42 | 2.8 | **3.97** | **3.5** | 5.54 | 5.54 |
| 0.7 | 2.4 | 2.49 | 4.78 | 5.34 | 7.93 | 5.72 |
| 0.8 | 2.36 | 2.43 | 6.28 | 5.35 | 4.52 | 7.52 |
| 0.9 | 2.31 | 2.23 | 4.89 | 3.86 | 5.51 | 6.69 |
| 1 | **2.15** | **2.04** | 4.9 | 4.51 | 12.3 | 7.21 |

FIG. 5

Europäisches
Patentamt

European
Patent Office

Office européen
des brevets

**EUROPEAN SEARCH REPORT**

Application Number

EP 24 15 4143

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | TING CHEN ET AL: "A Generalist Framework for Panoptic Segmentation of Images and Videos", ARXIV.ORG, CORNELL UNIVERSITY LIBRARY, 201 OLIN LIBRARY CORNELL UNIVERSITY ITHACA, NY 14853, 29 December 2022 (2022-12-29), XP091404540, * the whole document * | 1-12 | INV. G06N3/0464 G06N3/0475 G06N3/09  ADD. G06N3/0455 |
| A | ALLAN JABRI ET AL: "Scalable Adaptive Computation for Iterative Generation", ARXIV.ORG, CORNELL UNIVERSITY LIBRARY, 201 OLIN LIBRARY CORNELL UNIVERSITY ITHACA, NY 14853, 22 December 2022 (2022-12-22), XP091540484, * Sections 1, 2, Algorithms 1, 2 * | 1-12 | |

**TECHNICAL FIELDS SEARCHED (IPC)**

G06N

The present search report has been drawn up for all claims

| Place of search | Date of completion of the search | Examiner |
|---|---|---|
| The Hague | 14 June 2024 | Efthymiadis, K |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2023085784 W